# EUROPEAN PATENT SPECIFICATION

(11) **EP 0 387 228 B1**
(45) Date of publication and mention of the grant of the patent: **11.05.1994**
(21) Application number: 90850097.8
(22) Date of filing: 06.03.1990
(51) Int. Cl.: B23B 31/26

(54) **Tool coupling between a toolholder and a machine spindle**
Werkzeugkoppelung zwischen einem Werkzeughalter und einer Maschinenspindel
Accouplement d'outil entre un porte-outil et une broche de machine

(30) Priority: 08.03.1989 SE 8900808
(43) Date of publication of application: 12.09.1990
(73) Proprietor: SANDVIK AKTIEBOLAG, 811 81 Sandviken (SE)
(72) Inventor: Tjernström, Eric, S-803 21 Gävle (SE)
(74) Representative: Taquist, Lennart

(56) References cited:
- EP-A- 0 291 048
- EP-A- 0 339 321
- DE-C- 3 509 922
- FR-A- 2 068 130
- FR-A- 2 309 297

## Description

The present invention relates to a tool clamping device for machine tools, comprising a draw bar that is axially displaceable inside a machine spindle and a locking element arranged in cooperation with said draw bar, said device carrying a toolholder by exercising a relative movement between the draw bar and the locking element thus effecting a lateral displacement of said locking element into locking engagement with the shaft portion of said toolholder (see e.g. EP-A-0291 048).

There is an increased demand for tool clamping devices that are reliable in tooling machines. Usually the tool is carried by a conical portion which is aimed to centralize the tool in the spindle and to absorb the radial and axial forces that are acting on the tool. There is also an increased demand for devices that enable tool changes to be made automatically in tooling machines.

It is therefore a purpose of the present invention to provide a tool clamping device that enables transmission of much larger tensile forces than what is possible with other commercially available devices.

It is another purpose of the invention to provide a tool clamping device which requires less space than those hitherto available.

It is another purpose of the invention to provide such a clamping device that enables a short axial displacement of the clamping sleeve in connection with change of tools.

It is yet another purpose of the invention to provide a clamping device that consists of a few details thus enabling simplified construction of the device.

These purposes are met with a tool clamping device having the features of claim 1.

The invention will now be described more in detail in connection with the preferred embodiment illustrated on the enclosed drawings.

Fig. 1 shows a longitudinal section of a tool machine spindle and a clamping device arranged therein according to one embodiment of the invention, and more specifically, to the right of the centre line, the device is in its clamped position and to the left of the centre line, the device is in its released position.

Fig. 2 shows an axial section of another embodiment of the clamping device of the invention wherein the clamping sleeve is axially slotted and composed of vulcanized rubber and metal segments.

Fig. 3-5 shows sectional views of possible embodiments of locking elements forming part of the clamping device shown in Fig. 2.

In the Figures there is shown a portion of a tool machine spindle 10. The spindle 10 is power operated in a conventional way and therefore the means that are used are not shown. A shaft portion 12 of a toolholder 13 which is symmetrical about the central axis 11 is received in a corresponding cylindrical bore 14 in the machine spindle 10. The shaft portion 12 is intended to carry a tool (not shown) at one end thereof.

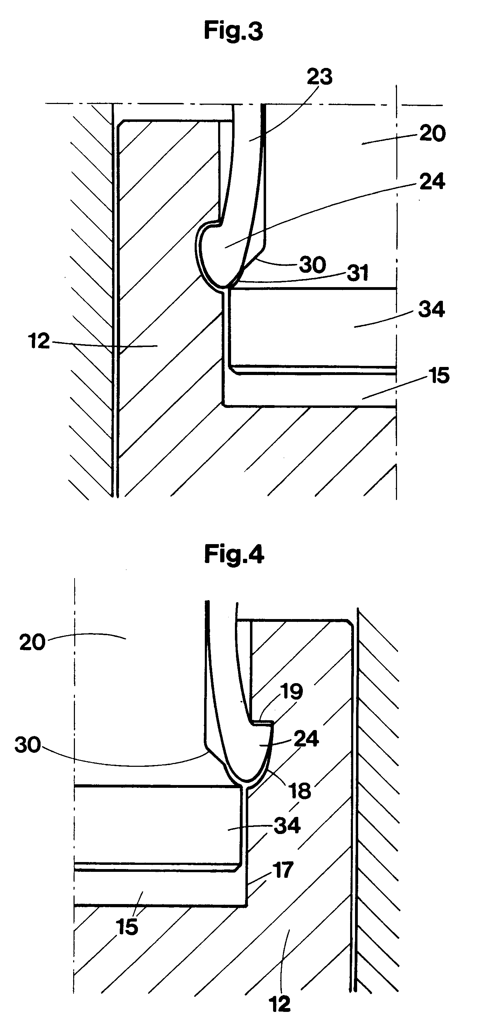

The shaft portion 12 is at its opposite end provided with a cylindrical hole 15 confined by a radial bottom surface 16 and an axially extending hole wall 17 in which an annular recess 18, semi-circular in cross-section, is provided. As shown in Fig. 3-4 the recess 18 could alternatively have a formation differing from semi-circular. As shown in Fig. 3 the annular recess can be smoothly rounded whilst extending axially. In Fig. 4-5 there is shown an embodiment where the annular recess 18 has a downward smoothly rounded portion which is elongated but confined axially upwards by an upper radial shoulder 19.

A clamping device which carries the shaft portion 12 and the toolholder 13 is provided inside the machine spindle, said clamping device comprising a draw bar 20 the lower end of which is provided in form of a radially extended shoulder portion 21. Between a radially provided surface 22 on the spindle, intended for axial abutment, and the shoulder 21 on the draw bar 20 a sleeve 23 is provided concentrically around the bar 20, the lower portion of said sleeve 23 being in shape of an annular flange 24 with a circularly rounded profile. When the draw bar is subjected to forces in F₁-direction the annular flange 24 is forced radially outwards, due to the shoulder 21, and further into engagement with the recess 18 in the shaft portion 13. This is made possible due to the fact that the sleeve 23 is manufactured of spring steel in a thin section and by having provided a number of axially extending slots around its circumference, said slots extending upwardly from the flange 24 and up to a rear point 25 on the sleeve 23 where the rear portion 26 of said sleeve is somewhat broader in its section than the remainder portion of the sleeve. This rear portion 26 has an even thickness and is received with clearance fit in a corresponding recess 27 in the spindle whilst being in abutment against an O-ring 28 located against radial surface 22, said O-ring acting as a tolerance absorbing element.

The force that is applied to the draw bar 20 is transferred to the shoulder portion 21 by means of the contact that is applied by the annular flange 24 of said sleeve 23 on to the shaft portion 12 in the point 29. There is consequently no transmission of the force F₁ to be applied on the draw bar 20. The shoulder portion 21 which forces the flange 24 radially outwards and into the annular recess 18 comprises a bevelled surface 30, inclined in relation to the central axis 11, and a radially outer surface 31 that preferably has a circularly rounded formation. The bevelled surface 30 is intended to act as a sliding surface and the outer surface 31 is intended to represent an abutment for the flange 24 of the sleeve 23.

It is important that the outer surface 31 has a smoothly rounded profile which as closely as possible matches the profile of said annular flange 24. This ensures the establishment of largest possible contact surface which enables a desirable low surface pressure. It is equally as important that said outer surface 31, said annular flange 24 and the annular recess 18 are made of a hardened material which makes it easier to maintain desired dimensional limitations of the device.

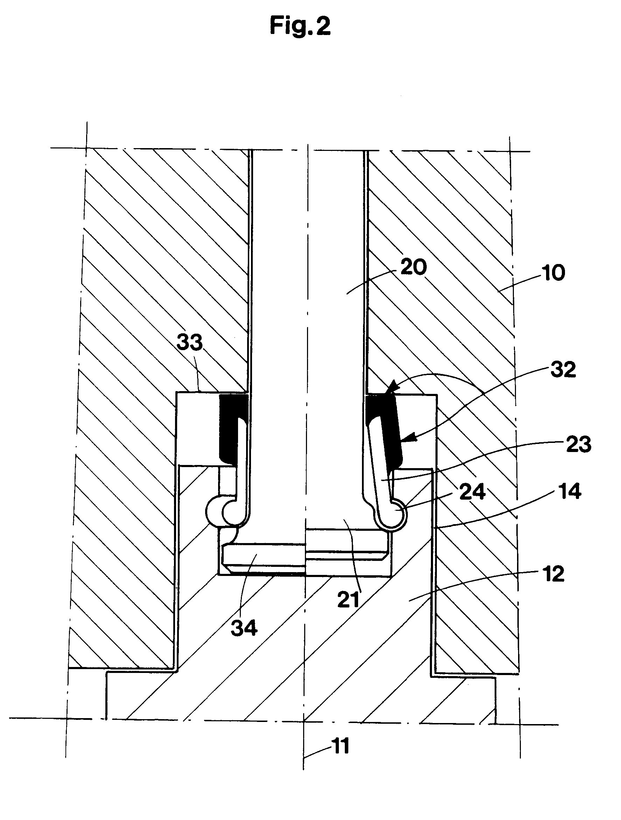

In Fig. 2 there is shown an alternative embodiment of the device in which the clamping sleeve 23 again comprises a lower end portion in the form of a circular extension 24 that is integral with the remainder of said sleeve whereas the upper portion thereof comprises a number of slots distributed around the periphery of the sleeve in which rubber or any other synthetic material is vulcanized. In addition thereto rubber portions 32 are firmly vulcanized on to the outer surface of said clamping sleeve along a portion of its length and also provided as rear end portions arranged in abutment with an abutment surface 33 provided radially. This enables the synthetic portion 32 to be expandable when the force F₁ is exerted to the draw bar 20 in order to have the shaft portion 12 firmly secured to the machine spindle 10. The synthetic material or the rubber will contract the sleeve when the draw bar is subjected to the force F₂.

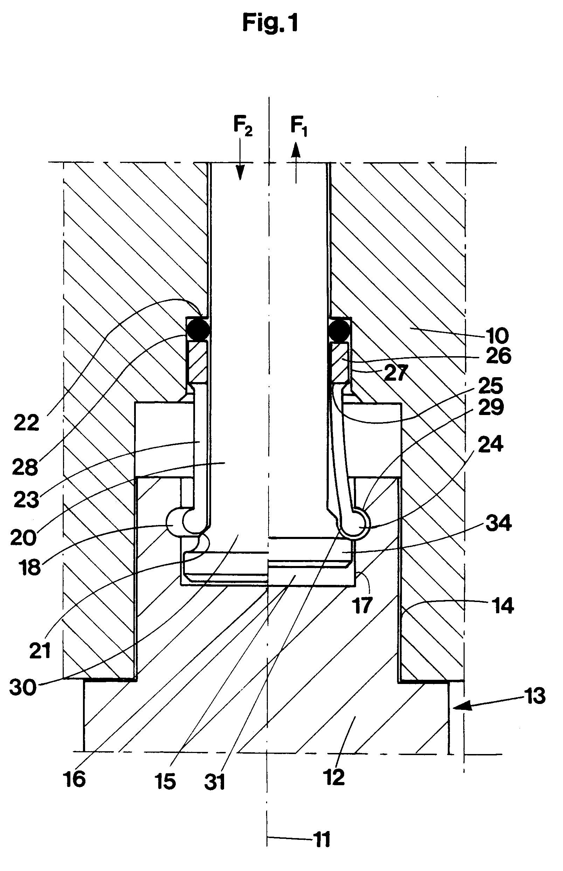

In order to have the draw bar 20 in Fig. 1-2 subjected to a good centering and guidance axially in the hole 15 the outer mantle surface of the shoulder portion 21 has been formed as a cylindrical guiding surface 34 aimed to be guided with clearance fit towards the axially extending hole wall 17 in the hole 15. When there is a need for change of tools the draw bar 20 is activated by a press force F₂ sufficiently large so as to press the bar 20 and its shoulder portion 21 to the position shown to the left of the centre line 11. The diameter of the flange 24 is selected such that the shaft portion 12 can be released axially from the draw bar 20 to enable desired exchange of tools. As appears from Fig. 1 and 2 the shoulder portion 21 of said draw bar 20 is brought to a position where its end surface comes to abutment with the bottom surface 16 of said hole 15 when the force F₂ acts upon the draw bar so that it is brought to its release position as shown to the left of the centre line 11 whereby the draw bar 20 acts as a pushing-out member.

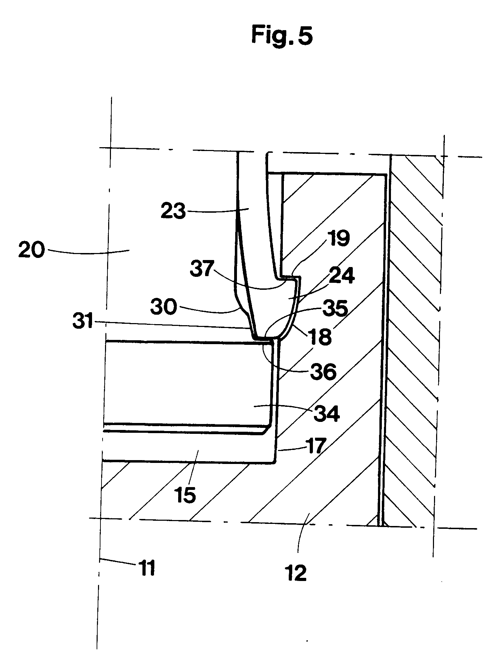

In Fig. 5 there is shown an alternative embodiment wherein the annular recess 18 has the same formation as in Fig. 4. Hence, the axial abutment for the locking member 24 is provided by a radial abutment 19 whereas the interior surface of the lower portion of the clamping sleeve 23 comes into surface contact with the abutment surface 31 on the shoulder 21, said surface 31 being located outwardly of bevelled surface 30 whilst inclined in relation to the centre line 11. The lower end portion of the locking member 24 is made in the form of a radial support surface 35 which is brought in contact with a radial surface 36 on the draw bar 20 which is oriented parallel with an upper support surface 37 intended for abutment against the radial abutment surface 19.

Due to the provision of an axially slotted clamping sleeve as aforesaid wherein rubber segments are vulcanized between metal segments it is ensured that during clamping there is established an elastic outbending radially and that fatigue failure of the material due to outbending of the metal segments is limited to the rubber material in the vulcanized part. Vulcanization by means of rubber can serve the purpose of a collapse-promoting element, i.e. promotes contraction of the sleeve, and to serve as a tolerance absorbing unit. Due to the fact that no force transmission occurs when said locking sleeve 23 is subject to a relative movement in relation to the locking recess its requirements of tolerance and surface finish are very low and therefore it is not necessary to perform any grinding of tool.

The tool clamping device has been described when used in a machine spindle with a rotary tool. It is to be understood however that the invention is also useful for the purpose of connecting a stationary turning tool with a correspondingly matching tool machine.

## Claims

1. Tool clamping device for machine tools comprising a draw bar (20) that is axially displaceable inside a machine spindle (10) said draw bar being provided with a radially extending shoulder portion (21) at one end, and a locking element (24) arranged concentrically around said draw bar for the purpose of carrying a shaft portion (12) of a tool holder by exercising a relative movement between the draw bar and the locking element, thus effecting a lateral displacement of said locking element (24) into locking engagement with the shaft portion (12) of said tool holder, **characterized** in that the shoulder portion of said draw bar is provided as a radially forged shoulder (21) comprising two distinct surface portions (30, 31), and that the locking element consists of a radially expandable clamping sleeve (23) provided around said draw bar provided with an integral annular flange (24) which is received in a cylindrical hole (15) in the shaft portion jointly together with the shoulder portion (21) whereby the draw bar (20) is provided with an inclined bevelled face (30) so as to exert a radial force outwards on to said flange (24) so that the latter, upon axial clamping of said draw bar, is forced into final abutment with a radially outer surface (31) on said draw bar whilst simultaneously engaging with a correspondingly designed annular recess (18) provided in the shaft portion (12) for the clamping thereof, whereby said outer surface (31) has a profile which matches the profile of said flange (24).

2. Tool clamping device as defined in claim 1, **characterized** in that the clamping sleeve (23) is radially expandable by being provided with axially extending slots distributed around its circumference, said slots extending along a major portion of the length of said sleeve.

3. Tool clamping device as defined in claim 1 **characterized** in that the annular recess (18) is provided with circular cross-section, and that the annular flange (24) has a corresponding formation.

4. Tool clamping device as defined in claim 1, **characterized** in that the annular flange (24) of the clamping sleeve and the shoulder portion (21) of said draw bar are received in a counterbore (15) of such depth that the end surface of the draw bar comes into abutment with the radial bottom surface (16) of said counterbore (15) when the draw bar is displaced into its release position.

5. Tool clamping device as defined in claim 2, **characterized** in that the rear portion of said sleeve (23) has a number of axial slots around its circumference in which portions (32) of rubber or other synthetic material is vulcanized whereby said rubber portions (32) also extend axially beyond said sleeve so as to provide a rear end portion for abutment against a radially provided surface (22) in the spindle (10).

6. Tool clamping device as defined in claim 1, **characterized** in that the rear portion (26) of said sleeve (23) has a wider cross-section than the remainder of the sleeve whilst being received with clearance fit in a corresponding recess (27) in the shoulder in axial abutment with an O-ring (28) of rubber.

7. Tool clamping device as defined in any of the claims 1-6, **characterized** in that the integral shoulder (21) of the draw bar (20) is received in a cylindrical hole (15) of such diameter that the clamping sleeve (23) becomes radially expandable in the annular space between the hole wall (17) and the mantle surface of the draw bar.

8. Tool clamping device as defined in any of the claims 1-7, **characterized** in that the outer mantle surface of the shoulder (21) is in the shape of a cylindrical guiding surface (34) provided to be slidable with clearance fit towards the hole wall (17).

9. Tool clamping device as defined in any of the claims 1-8, **characterized** in that the flange (24) and the annular recess (18) are axially elongated whilst having a smoothly rounded mantle surface.

10. Tool clamping device as defined in any of the claims 1-9, **characterized** in that the annular recess (18) is elongated and comprises an axially forward rounded portion and a rear end portion in the form of a radial shoulder (19) whereby the flange (24) has a complementary shape.

11. Tool clamping device as defined in claim 10, **characterized** in that the abutment surface (31) that is located outwardly of the bevelled surface (30) is inclined whereby the interior surface of the lower portion of the annular flange (24) is provided at a correspondingly inclined angle.

12. Tool clamping device as defined in claim 11, **characterized** in that the abutment surface (31) is inclined at an angle in relation to the centre line (11) that is smaller than the inclination angle of the radially inner bevelled face (30).

13. Tool clamping device as defined in claim 9, **characterized** in that the lower and upper end portions of the annular flange (24) are in the shape of radially provided surfaces (35) and (37) respectively, the lower radial surface (35) being arranged for abutment against a radial surface (36) on the draw bar (20) whereby the radial surface (36) on said draw bar is located adjacent to and intersects with the axially extending guide surface (34) on said draw bar.

## Patentansprüche

1. Werkzeugklemmvorrichtung für Maschinenwerkzeuge mit einer Zugstange (20), die Innerhalb einer Maschinenspindel (10) verschiebbar ist, wobei die Zugstange an einem Ende mit einem sich radial erstreckenden Schulterteil (21) versehen ist, und mit einem Sperrelement (24), welches konzentrisch um die Zugstange angebracht ist, um einen Wellenteil (12) eines Werkzeughalters durch Ausüben einer relativen Bewegung zwischen der Zugstange und dem Sperrelement zu tragen, wodurch ein seitliches Verschieben des Sperrelementes (24) in sperrenden Eingriff mit dem Wellenteil (12) des Werkzeughalters bewirkt wird, dadurch gekennzeichnet, daß der Schulterteil der Zugstange als eine radial geschmiedete Schulter (21) mit zwei verschiedenen Flächenteilen (30, 31) vorgesehen ist und daß das Sperrelement aus einer radial dehnbaren Klemmhülse (23) besteht, die um diese Zugstange herum vorgesehen ist, welche mit einem ganzheitlichen, ringförmigen Flansch (24) versehen ist, der in einem zylindrischen Loch (15) in dem Wellenteil gemeinsam mit dem Schulterteil (21) aufgenommen wird, wobei die Zugstange (20) mit einer geneigten, abgeschrägten Fläche (30) versehen ist, um eine radiale Kraft nach außen auf den Flansch (24) auszuüben, so daß letzterer auf axiales Klemmen der Zugstange hin in Endanschlag mit der radialen äußeren Fläche (31) auf der Zugstange kommt, während er gleichzeitig mit einer entsprechend ringförmig geformten Ausnehmung (18) in Eingriff kommt, die in dem Wellenteil (12) für sein Klemmen vorgesehen ist, wobei die äußere Fläche (31) ein Profil hat, welches zu dem Profil des Flansches (24) paßt.

2. Werkzeugkiemmvorrichtung nach Anspruch 1, dadurch gekennzeichnet, daß die Klemmhülse (23) radial dehnbar ist, in dem sie mit sich axial erstreckenden Schlitzen versehen ist, die um ihren Umfang verteilt sind, wobei sich die Schlitze entlang des Hauptteiles der Länge der Hülse erstrecken.

3. Werkzeugklemmvorrichtung nach Anspruch 1, dadurch gekennzeichnet, daß die ringförmige Ausnehmung (18) einen kreisrunden Querschnitt hat und daß der ringförmige Flansch (24) eine entsprechende Form besitzt.

4. Werkzeugklemmvorrichtung nach Anspruch 1, dadurch gekennzeichnet, daß der ringförmige Flansch (24) der Klemmhülse und der Schulterteil (21) der Zugstange in einem Stirnsenker (15) aufgenommen werden, der eine solche Tiefe hat, daß die Endfläche der Zugstange mit der radialen Bodenfläche (16) des Stirnsenkers (15) in Anschlag kommt, wenn die Zugstange in ihre gelöste Lage versetzt wird.

5. Werkzeugklemmvorrichtung nach Anspruch 2, dadurch gekennzeichnet, daß der rückwärtige Teil der Hülse (23) eine Anzahl von axialen Schlitzen rund um ihren Umfang hat, in welchem Teile (32) von Gummi oder anderem synthetischen Material vulkanisiert sind, wodurch die Gummiteile (32) sich auch axial über die Hülse so erstrecken, daß ein rückwärtiger Endteil für den Anschlag gegen eine radial vorgesehene Fläche (22) in der Spindel (10) vorgesehen wird.

6. Werkzeugklemmvorrichtung nach Anspruch 1, dadurch gekennzeichnet, daß der hintere Teil (26) der Hülse (23) einen breiteren Querschnitt hat, als der verbleibende Teil der Hülse, wobei er mit Spiel passend in einer entsprechenden Ausnehmung (27) in der Schulter in axialem Anschlag mit einem O-Ring (28) aus Gummi aufgenommen wird.

7. Werkzeugklemmvorrichtung nach einem der Ansprüche 1 bis 6, dadurch gekennzeichnet, daß die ganzheitliche Schulter (21) der Zugstange (20) in einem zylindrischen Loch (15) aufgenommen wird, welches einen solchen Durchmesser hat, daß die Klemmhülse (23) in dem ringförmigen Raum zwischen der Lochwand (17) und der Mantelfläche der Zugstange radial dehnbar wird.

8. Werkzeugklemmvorrichtung nach einem der Ansprüche 1 bis 7, dadurch gekennzeichnet, daß die äußere Mantelfläche der Schulter (21) die Form einer zylindrischen Führungsfläche (34) hat, die dazu vorgesehen ist, mit Spiel passend gegen die Lochwand (17) gleitbar zu sein.

9. Werkzeugklemmvorrichtung nach einem der Ansprüche 1 bis 8, dadurch gekennzeichnet, daß der Flansch (24) und die ringförmige Ausnehmung (18) axial verlängert sind, während sie eine gleichmäßig gerundete Mantelfläche haben.

10. Werkzeugklemmvorrichtung nach einem der Ansprüche 1 bis 9, dadurch gekennzeichnet, daß die ringförmige Ausnehmung (18) verlängert ist und einen axial nach vorwärts gerundeten Teil und einen rückwärtigen Endtell in der Form einer radialen Schulter (19) hat, wobei der Flansch (24) eine entsprechende Form hat.

11. Werkzeugklemmvorrichtung nach Anspruch 10, dadurch gekennzeichnet, daß die Anschlagfläche (31), die auswärts der abgeschrägten Fläche (30) angeordnet ist, geneigt ist, wobei die Innere Fläche des unteren Teiles des ringförmigen Flansches (24) mit einem entsprechend geneigten Winkel versehen ist.

12. Werkzeugklemmvorrichtung nach Anspruch 11, dadurch gekennzeichnet, daß die Anschlagflächen (31) unter einem Winkel bezüglich der Mitellinie (11) geneigt ist, der kleiner ist als der Neigungswinkel der radlal Inneren, abgeschrägten Fläche (30).

13. Werkzeugklemmvorrichtung nach Anspruch 9, dadurch gekennzeichnet, daß die unteren und oberen Endteile des ringförmigen Flansches (24) in der Form von radial vorgesehenen Flächen (35 bzw. 37) vorgesehen sind, wobei die untere radiale Fläche (35) für den Anschlag gegen die radiale Fläche (36) auf der Zugstange (20) angeordnet ist, wodurch die radiale Fläche (36) auf der Zugstange angrenzend zu und kreuzend mit der sich axial erstreckenden Führungsfläche (34) auf der Zugstange angeordnet ist.

## Revendications

1. Dispositif de serrage d'outil pour machines-outils comprenant une barre de traction (20) qui peut se déplacer axialement à l'intérieur d'une broche (10) de machine, ladite barre de traction étant munie d'une portion épaulement (21) s'étendant radialement à une extrémité et un élément de verrouillage (24) agencé concentriquement autour de ladite barre de traction, pour porter une portion queue (12) d'une porte-outil en exécutant un déplacement relatif entre la barre de traction et l'élément de verrouillage, et en déterminant de cette façon un déplacement latéral dudit élément de verrouillage (24) pour le mettre en prise verrouillée avec la partie queue (12) dudit porte-outil,
caractérisé en ce que la portion épaulement de ladite barre de traction est munie d'un épaulement (21) forgé radialement, comprenant deux portions de surface distinctes (30, 31) et en ce que l'élément de verrouillage est composé d'un manchon de serrage (23) pouvant se dilater radialement, prévu autour de ladite barre de traction, muni d'une collerette annulaire (24) venue d'une seule pièce, qui est logée dans un perçage cylindrique (15) de la portion queue, conjointement avec la portion épaulement (21), la barre de traction (20) étant munie d'une face biseautée inclinée (30) de manière à exercer une force radiale vers l'extérieur sur ladite collerette (24), de sorte que cette dernière, en réponse à un serrage axial de ladite barre de traction, est forcée à entrer en butée finale contre une surface radialement extérieure (31) de ladite barre de traction tout en entrant simultanément en prise avec une gorge annulaire (18) d'un dessin correspondant, qui est prévue dans la portion queue (12) pour serrer cette dernière, la surface extérieure (31) ayant un profil qui épouse le profil de ladite collerette (24).

2. Dispositif de serrage d'outil selon la revendication 1,
caractérisé en ce que le manchon de serrage (23) peut se dilater radialement grâce au fait qu'il est muni de fentes s'étendant axialement réparties sur sa circonférence, lesdites fentes s'étendant sur une majeure partie de la longueur du manchon.

3. Dispositif de serrage d'outil selon la revendication 1,
caractérisé en ce que la gorge annulaire (18) est dotée d'une section circulaire et en ce que la collerette annulaire (24) a une formation correspondante.

4. Dispositif de serrage d'outil selon la revendication 1.
caractérisé en ce que la collerette annulaire (24) du manchon de serrage et la portion épaulement (21) de ladite barre de traction sont logées dans un contre-alésage (15) ayant une profondeur telle que la surface d'extrémité de la barre de traction entre en butée contre la surface de fond radiale (16) dudit contre alésage (14) lorsque la barre de traction est placée dans sa position de serrage.

5. Dispositif de serrage d'outil selon la revendication 2,
caractérisé en ce que la portion arrière dudit manchon (23) possède un certain nombre de fentes axiales sur sa circonférence, dans lesquelles des portions (32) de caoutchouc ou d'une autre matière synthétique sont vulcanisées, lesdites portions (32) de caoutchouc se prolongeant aussi axialement au-delà dudit manchon de manière à former une portion d'extrémité arrière destinée à buter contre une surface (22) prévue radialement dans la broche (10) .

6. Dispositif de serrage d'outil selon la revendication 1,
caractérisé en ce que la portion arrière (26) dudit manchon (23) a une plus large section que le reste du manchon, tout en étant cependant logée avec jeu dans un évidement correspondant (27) de l'épaulement, en butée axiale contre une bague torique (28) en caoutchouc.

7. Dispositif de serrage d'outil selon une quelconque des revendications 1 à 6,
caractérisé en ce que l'épaulement (21) venu de matière de la barre de traction (20) est logé dans un perçage cylindrique (15) d'un diamètre tel que le manchon de serrage (23) puisse se dilater radialement dans l'espace annulaire compris entre la paroi (17) du perçage et la surface latérale de la barre de traction.

8. Dispositif de serrage d'outil selon une quelconque des revendications 1 à 7,
caractérisé en ce que la surface latérale extérieure de l'épaulement (21) présente la forme d'une surface de guidage cylindrique (34) prévue pour pouvoir coulisser avec jeu par rapport à la paroi (17) du perçage.

9. Dispositif de serrage d'outil selon une quelconque des revendications 1 à 8,
caractérisé en ce que la collerette (24) et la gorge annulaire (18) sont allongées axialement tout en possédant une surface latérale arrondie à grand rayon.

10. Dispositif de serrage d'outil selon une quelconque des revendications 1 à 9,
caractérisé en ce que la gorge annulaire (18) est allongée et comprend une portion arrondie dirigée axialement vers l'avant et une portion d'extrémité arrière présentant la forme d'un épaulement radial (19), la collerette (24) ayant une forme complémentaire.

11. Dispositif de serrage d'outil selon la revendication 10,
caractérisé en ce que la surface de butée (31) placée à l'extérieur de la surface biseautée (30) est inclinée, la surface intérieure de la portion inférieure de la collerette annulaire (24) étant formée à un angle d'inclinaison correspondant.

12. Dispositif de serrage d'outil selon la revendication 11,
caractérisé en ce que la surface de butée (31) est inclinée par rapport à l'axe (11) d'un angle qui est plus petit que l'angle d'inclinaison de la surface biseautée radialement intérieure (30).

13. Dispositif de serrage d'outil selon la revendication 9,
caractérisé en ce que les portions d'extrémité inférieure et supérieure de la collerette annulaire (24) présentent la forme de surfaces formées radialement (35) et (37) respectivement, la surface radiale inférieure (35) étant agencée pour buter contre une surface radiale (36) de la barre de traction (20), la surface radiale (36) de ladite barre de traction étant placée adjacente à la surface de guidage (34), orientée axialement, de ladite barre de traction, et coupant cette surface.
